# EUROPÄISCHE PATENTSCHRIFT

(11) **EP 3 511 100 B1**
(45) Veröffentlichungstag und Bekanntmachung des Hinweises auf die Patenterteilung: **09.12.2020**
(21) Anmeldenummer: 18151648.5
(22) Anmeldetag: 15.01.2018
(51) Int. Cl.: B23F 5/16, B23F 9/02, B23F 9/10

(54) **VERFAHREN ZUM VERZAHNEN VON KEGELRAD-WERKSTÜCKEN**
METHOD FOR PROCESSING BEVEL GEAR WORKPIECES
PROCÉDÉ DESTINÉ À TAILLER DES PIÈCES À USINER FORMANT ROUE CONIQUE

(43) Veröffentlichungstag der Anmeldung: 17.07.2019
(73) Patentinhaber: Klingelnberg AG, 8050 Zürich (CH)
(72) Erfinder: Frischtatzky, Rafael, 51429 Bergisch-Gladbach (DE); Rabanus, Timon, 42499 Hückeswagen (DE); Ribbeck, Karl-Martin, 42897 Remscheid (DE)
(74) Vertreter: Heusch, Christian

(56) Entgegenhaltungen:
- EP-A1- 1 518 630
- EP-A1- 2 412 467
- EP-A1- 2 535 134

## Beschreibung

### Gebiet der Erfindung

Gegenstand der Erfindung ist ein Verfahren zum Verzahnen von Kegelrad-Werkstücken gemäß dem Oberbegriff des Patentanspruchs 1.

Ein derartiges Verfahren geht beispielsweise aus der EP 2 535 134 A1 hervor.

### Technologischer Hintergrund

Es gibt verschiedene Ansätze zum Verzahnen von Kegel- und Hypoidrädern. Dazu gehören zum Beispiel das Fräsen und Schleifen.

Zusätzlich unterscheidet man Einzelteilverfahren und kontinuierlich teilende Verfahren. Bei einem Einzelteilverfahren werden die entsprechenden Verfahrensschritte mehrmals (entsprechend der Anzahl der Lücken) wiederholt. Beim kontinuierlichen Ansatz hingegen werden alle Zahnlücken in einem Durchlauf bearbeitet.

Beim Wälzen einer Verzahnung muss ein bestimmter Wälzbereich zur Erzeugung des Profils der Zahnflanken durchlaufen (durchgewälzt) werden, wobei die Richtung der Wälzbewegung zwischen Verzahnungswerkzeug und Werkstück von der Zehe zur Ferse des Werkstücks oder von der Ferse zur Zehe gewählt werden kann. Dieser Wälzbereich wird durch Anfangswinkel und Endwinkel definiert und der Anfangswinkel dieses Bereiches wird hier als Anfangsprofilwälzwinkel und der Endwinkel als Endprofilwälzwinkel bezeichnet. Der Anfangsprofilwälzwinkel und der Endprofilwälzwinkel definieren den Wälzbereich, in dem durch das Verzahnungswerkzeug gerade noch Punkte des Zahnflankenprofils generiert werden. Der Bereich zwischen diesen Profilwälzwinkeln (Wälzstellungen) kann als Profilwälzbereich bezeichnet werden. Es gibt einen Profilwälzwinkel für die Zehe (Profilwälzwinkel-Zehe genannt) und einen Profilwälzwinkel für die Ferse (Profilwälzwinkel-Ferse genannt) des Werkstücks.

Der jeweilige Profilwälzbereich ergibt sich aus den geometrischen Eigenschaften des zu verzahnenden Kegelrades und aus dem Prozess, der zum Verzahnen eingesetzt wird. D.h. der Profilwälzbereich ist eine Größe, die rechnerisch z.B. im Rahmen der Auslegung ermittelt werden kann. Der Profilwälzbereich ist somit eine feste Prozessgröße des Verzahnungsprozesses des jeweiligen Kegelrades. Je nach Prozess, der zum Verzahnen von Kegel- und Hypoidrädern verwendet wird, kann gemäß Stand der Technik der Wälzweg sogar etwas länger sein, um einen kleinen Sicherheitsabstand vorzugeben.

Es gibt Punkte oder Bereiche in einer Zahnlücke, die nicht auf dem endgültigen Zahnprofil liegen und die nicht durch eine reine Wälzbewegung innerhalb des Profilwälzbereichs entfernt werden. Ihre Lage ist vom Wälzanfang und der Wälzrichtung abhängig. Um in diesen Bereichen Material des Werkstücks zu entfernen, wird entweder eine Tauchbewegung gewählt, bei der Material am Werkstück entfernt wird (Tauch-Wälzen genannt) oder es wird ein größerer Wälzbereich gewählt. Die Wälzwinkel, die diesen größeren Bereich begrenzen, werden durch einen Einwälzwinkel und einen Profilwälzwinkel definiert. Es handelt sich bei dem Einwälzwinkel um jenen Wälzwinkel, bei dem das Werkzeug bei einer reinen Wälzbewegung erstmalig beginnt Material am Werkstück zu entfernen. Diese erstmalige Berührung erfolgt am Kopfkegel des Werkstücks und je nach Wälzrichtung (beim Wälzen von der Zehe zur Ferse) an der Zehe des Werkstücks (Einwälzwinkel-Zehe) oder (beim Wälzen von der Ferse zur Zehe) an der Ferse des Werkstücks (Einwälzwinkel-Ferse).

Ein weiterer Punkt auf dem Wälzweg oder im Wälzbereich ist die sogenannte Wälzmitte. Das ist per Definitionem der Wälzwinkel, bei dem der Auslegungspunkt der Verzahnung erzeugt wird. Er muss nicht exakt in der Mitte des Wälzwegs zwischen Profilwälzwinkel-Zehe und Profilwälzwinkel-Ferse liegen.

Unter anderem werden die folgenden Prozesse zum Verzahnen von Kegel- und Hypoidrädern verwendet:
**Einwälzen:** Hierbei erfolgen keine Tauchbewegungen, bei denen Material abgenommen wird. Das Verzahnen erfolgt nur durch Wälzen. Es handelt sich somit um einen reinen Wälzprozess. Das Verzahnungswerkzeug wird im Eilgang außerhalb des Eingriffs mit dem Werkstück auf volle Tiefe gefahren. Außerhalb des Eingriffs bedeutet hier, dass eine Wälzstellung am Einwälzwinkel-Zehe (beim Wälzen von der Zehe zur Ferse) bzw. am Einwälzwinkel-Ferse (beim Wälzen von der Ferse zur Zehe) plus eines kleinen Sicherheitsabstands auf dem Wälzweg angefahren wird. Von hier beginnt die Wälzbewegung, d.h. der jeweilige Einwälzwinkel (plus einen Sicherheitsabstand) definiert den Wälzanfang. Die Wälzbewegung erfolgt dann bis zum entsprechenden Profilwälzwinkel-Ferse (beim Wälzen von der Zehe zur Ferse) bzw. bis zum entsprechenden Profilwälzwinkel-Zehe (beim Wälzen von der Ferse zur Zehe). Die Geschwindigkeit der Wälzbewegung kann bei diesem Wälzprozess über den Wälzweg konstant oder veränderlich sein. Am Wälzende (z.B. beim Profilwälzwinkel-Ferse) wird das Verzahnungswerkzeug aus der Lücke herausgefahren. Falls dieser Wälzprozess als Einzelteilverfahren ausgeführt wird, erfolgt nun die Teilbewegung und der beschriebene Vorgang wiederholt sich Lücke-für-Lücke.
**Einstechwälzen:** Das Einstechwälzen ist ein Tauch-Wälzprozess. Hier wird am Wälzanfang eingestochen oder eingetaucht. Je nach Wälzrichtung erfolgt dieses Einstechen am Profilwälzwinkel-Zehe (beim Wälzen von der Zehe zur Ferse) oder am Profilwälzwinkel-Ferse (beim Wälzen von der Ferse zur Zehe). Es wird mit einem Sicherheitsabstand in Tauchrichtung startend in einer Einstechbewegung in das Werkstück an der Zehe oder an der Ferse bis auf volle Zahntiefe eingestochen (auch Eintauchen genannt). Ist die volle Zahntiefe erreicht, stoppt die Einstechbewegung und es folgt die Wälzbewegung. Wälzende ist beim Einstechwälzen der jeweilige Profilwälzwinkel (Profilwälzwinkel-Ferse für die Wälzrichtung von der Zehe zur Ferse oder Profilwälzwinkel-Zehe für die Wälzrichtung von der Ferse zur Zehe). Die Geschwindigkeit der Wälzbewegung kann über den Wälzweg konstant oder veränderlich sein. Am Wälzende wird das Verzahnungswerkzeug aus der Lücke herausgefahren. Falls dieser Tauch-Wälzprozess als Einzelteilverfahren ausgeführt wird, erfolgt nun die Teilbewegung und der Vorgang wiederholt sich Lücke-für-Lücke.
**Einstechdoppelwälzen:** Das Einstechdoppelwälzen ist auch ein Tauch-Wälzprozess. Auch hier wird von einer Wälzstellung außerhalb des Werkstücks startend in das Werkstück eingetaucht und Material entfernt. Hierbei liegt der Wälzanfang zwischen dem Profilwälzwinkel-Zehe und dem Profilwälzwinkel-Ferse, jedoch nicht genau auf diesen. Häufig wird die Wälzmitte zum Eintauchen (auch Einstechen genannt) gewählt. Das Eintauchen kann bis auf volle Zahntiefe erfolgen oder es wird ein geringes Tiefenaufmaß stehen gelassen, d.h. das Eintauchen wird in der Position der vollen Zahntiefe minus einem Tiefenaufmaß gestoppt. Von diesem Punkt erfolgt nun die Wälzbewegung in Richtung Zehe bis zum Profilwälzwinkel-Zehe oder in Richtung Ferse bis zum Profilwälzwinkel-Ferse. Ist dieser Punkt erreicht, erfolgt, wenn ein Tiefenaufmaß stehen gelassen wurde, die Zustellung auf volle Zahntiefe, und dann eine Wälzbewegung in die andere Richtung bis zum jeweils anderen Profilwälzwinkel. Die Geschwindigkeit der Wälzbewegung kann über den Wälzweg konstant oder veränderlich sein. Am Wälzende wird das Verzahnungswerkzeug aus der Lücke herausgefahren. Falls dieser Tauch-Wälzprozess als Einzelteilverfahren ausgeführt wird, erfolgt nun die Teilbewegung und der Vorgang wiederholt sich Lücke-für-Lücke.
**Doppelwälzen:** Bei diesem Prozess erfolgen keine Tauchbewegungen bei denen Material abgenommen wird. Das Verzahnen erfolgt nur durch Wälzen. Es handelt sich somit um einen reinen Wälzprozess. Das Verzahnungswerkzeug wird im Eilgang außerhalb des Eingriffs mit dem Werkstück auf volle Tiefe minus einem Tiefenaufmaß gefahren. Außerhalb des Eingriffs bedeutet hier, dass eine Wälzstellung am Einwälzwinkel-Zehe (beim Wälzen von der Zehe zur Ferse) bzw. am Einwälzwinkel-Ferse (beim Wälzen von der Ferse zur Zehe) plus eines kleinen Sicherheitsabstandes auf dem Wälzweg angefahren wird. Von hier beginnt die Wälzbewegung, d.h. der jeweilige Einwälzwinkel (zuzüglich des Sicherheitsabstandes) definiert den Wälzanfang. Die Wälzbewegung erfolgt dann bis zum entsprechende Profilwälzwinkel-Ferse (beim Wälzen von der Zehe zur Ferse) bzw. bis zum entsprechende Profilwälzwinkel-Zehe (beim Wälzen von der Ferse zur Zehe). Ist der entsprechende Profilwälzwinkel erreicht, so erfolgt eine Tauchzustellung um das Tiefenaufmaß und anschließend das Rückwälzen bis zum jeweils anderen Profilwälzwinkel. Bei diesem Prozess wird die erste Wälzbewegung meist als Schruppwälzen und die zweite Wälzbewegung als Schlichtwälzen durchgeführt. Die Geschwindigkeit der Wälzbewegung kann über den Wälzweg konstant oder veränderlich sein. Am Wälzende wird das Verzahnungswerkzeug aus der Lücke herausgefahren. Falls dieser Wälzprozess als Einzelteilverfahren ausgeführt wird, erfolgt nun die Teilbewegung und der Vorgang wiederholt sich Lücke-für-Lücke.
**Tauchen:** Hierbei handelt es sich um eine reine Tauchbearbeitung und es erfolgt kein Wälzen. Dieser Prozess kann nur für entsprechend ausgelegte Tellerräder verwendet werden. Der Tauchprozess startet mit einem Sicherheitsabstand. Von hier aus erfolgt die Tauchbewegung. Diese kann mit konstanter oder veränderlicher Tauchgeschwindigkeit oder in Stufen erfolgen. Auch ein anschließendes Verweilen auf voller Zahntiefe kann vorgesehen werden. Hierbei kann auch ein Freischneiden durchgeführt werden. Anschließend wird das Verzahnungswerkzeug aus der Lücke herausgefahren. Falls dieser Tauchprozess als Einzelteilverfahren ausgeführt wird, erfolgt nun die Teilbewegung und der Vorgang wiederholt sich Lücke-für-Lücke.

Bei den hier beschriebenen Prozessen ist es so, dass alle Wälzprozesse als Wälzende einen Profilwälzwinkel haben. Auch sind die Wälzwege, wenn mehrere Umläufe erfolgen (bspw. Eintauchen an der Zehe mit einem Profilwälzwinkel-Zehe) mit Tiefenaufmass, Wälzen bis zum Profilwälzwinkel-Ferse, Tiefenzustellung an der Ferse (nicht auf die volle Zahntiefe), Wälzen bis zum Profilwälzwinkel-Zehe, Tiefenzustellung auf volle Zahntiefe, Wälzen bis zum Profilwälzwinkel-Ferse, Ausfahren aus der Zahnlücke) immer gleich lang.

Der Wälzweg definiert sich somit stets mindestens aus der Differenz des Profilwälzwinkel-Zehe und des Profilwälzwinkel-Ferse. Je nach Prozess, der zum Verzahnen von Kegel- und Hypoidrädern verwendet wird, kann der Wälzweg bei Verfahren des Standes der Technik sogar länger sein.

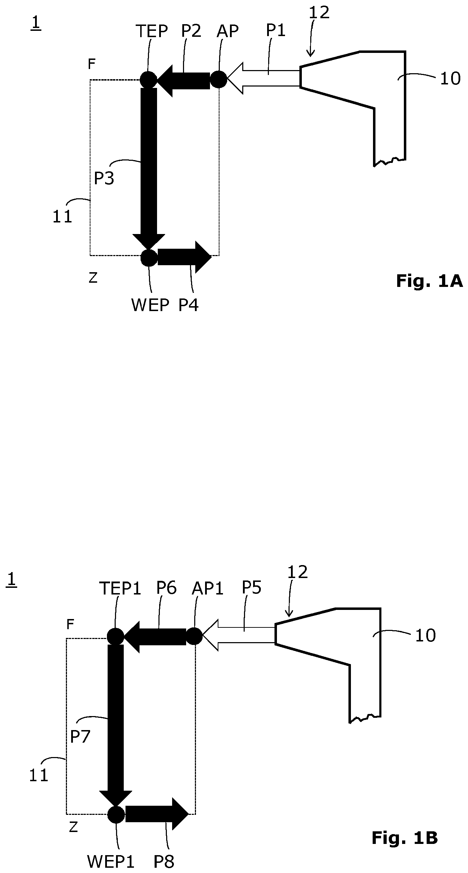

Anhand der Figuren 1A und 1B werden nun beispielhaft und rein schematisch weitere Details eines Einstechwälzprozesses beschrieben, wobei im gezeigten Beispiel eine Topfschleifscheibe 10 als Verzahnungswerkzeug zum Einsatz gebracht wird und wobei dieser Einstechwälzprozess zwei Durchgänge pro Zahnlücke umfasst. In den Figuren 1A, 1B ist nur ein Abschnitt einer Topfschleifscheibe 10 gezeigt. Von dem Kegelrad-Werkstück 11 ist nur ein Abschnitt in Form eines strichlierten Rechtecks gezeigt, wobei die Zehe mit einem Z und die Ferse mit einem F bezeichnet ist. Die Blockpfeile deuten die Bewegungen der Topfschleifscheibe 10 relativ zum Kegelrad-Werkstück 11 an. Die schwarzen Kreise können als Punkte im dreidimensionalen Raum verstanden werden, an denen sich die Bewegungsrichtung und/oder die Prozess- oder Bearbeitungsart ändert.

Bei dem hier gezeigten Prozess 1 wird die Topfschleifscheibe 10 relativ zum Kegelrad-Werkstück 11 zugestellt, um eine Ausgangsposition AP zu erreichen. Die entsprechende Zustellbewegung ist in Fig. 1A durch einen Pfeil P1 dargestellt. Ausgehend von der Ausgangsposition AP taucht/sticht die Topfschleifscheibe 10 stirnseitig ins weiche (nicht gehärtete) Material des Kegelrad-Werkstücks 11 ein. Dieses Eintauchen/Einstechen erfolgt hier an dem Profilwälzwinkel-Ferse, da es bei dem gezeigten Beispiel um ein Einstechwälzen von der Ferse F zur Zehe Z geht. Das Eintauchen/Einstechen ist durch einen schwarzen Pfeil P2 dargestellt. Bei dem gezeigten Prozess erfolgt in einem ersten Durchgang, der in Fig. 1A gezeigt ist, das Eintauchen/Einstechen nicht bis zur endgültigen Lückentiefe der zu bearbeitenden Zahnlücke, sondern es wird ein Aufmass stehen gelassen. Die schwarze Farbe der Pfeile in Fig. 1A, 1B soll andeuten, dass es sich um Vorgänge handelt, bei denen durch Schleifen (oder Fräsen) Material am Kegelrad-Werkstück 11 abgehoben wird. Sobald die Topfschleifscheibe 10 eingetaucht ist (diese Position wird Tauch-Endposition TEP genannt), erfolgt eine Relativbewegung (Wälzvorgang genannt) der Topfschleifscheibe 10 relativ zum Kegelrad-Werkstück 11, um über die gesamte Zahnbreite der zu erzeugenden Zahnlücke die Zahnlücke zu schleifen. Der Wälzvorgang, der in Fig. 1A schematisch durch einen schwarzen Pfeil P3 dargestellt ist, endet an einer Wälz-Endposition WEP, die durch den Profilwälzwinkel-Zehe definiert ist. Nachdem in Fig. 1A die Wälz-Endposition WEP der Topfschleifscheibe 10 relativ zum Kegelrad-Werkstück 11 erreicht wurde, wird die Topfschleifscheibe 10 zurückgezogen. Das geschieht am Profilwälzwinkel-Zehe. Diese relative Rückzugsbewegung ist in Fig. 1 durch einen Pfeil P4 dargestellt.

Nun folgt, wie in Fig. 1B gezeigt, ein zweiter Durchgang mit Eintauchen/Einstechen und Wälzen. Bei dem zweiten Durchgang des hier gezeigten Prozesses 1 wird die Topfschleifscheibe 10 erneut relativ zum Kegelrad-Werkstück 11 zugestellt, um jetzt eine Ausgangsposition AP1 zu erreichen. Die entsprechende Zustellbewegung ist in Fig. 1B durch einen Pfeil P5 dargestellt. Ausgehend von der Ausgangsposition AP1 taucht/sticht die Topfschleifscheibe 10 bis: zur vollen Tiefe der Zahnlücke ins Material des Kegelrad-Werkstücks 11 ein. Das Eintauchen/Einstechen ist durch einen schwarzen Pfeil P6 dargestellt. Sobald die Topfschleifscheibe 10 auf die volle Tiefe eingetaucht ist (diese Position wird Tauch-Endposition TEP1 genannt), erfolgt eine Relativbewegung (Wälzvorgang genannt) der Topfschleifscheibe 10 relativ zum Kegelrad-Werkstück 11, um über die gesamte Zahnbreite der zu erzeugenden Zahnlücke die Zahnlücke zu schleifen. Der Wälzvorgang, der in Fig. 1B schematisch durch einen schwarzen Pfeil P7 dargestellt ist, endet an einer Wälz-Endposition WEP1, die durch den Profilwälzwinkel-Zehe definiert ist. Dann erfolgt ein Austauchvorgang, der durch den schwarzen Pfeil P8 dargestellt ist.

Nun kann das Kegelrad-Werkstück eine Teilungsdrehung durchführen und die Topfschleifscheibe 10 wird zur Ausgangsposition AP bewegt. Dann wiederholt sich der in den Figuren 1A, 1B gezeigte Vorgang Lücke-für-Lücke.

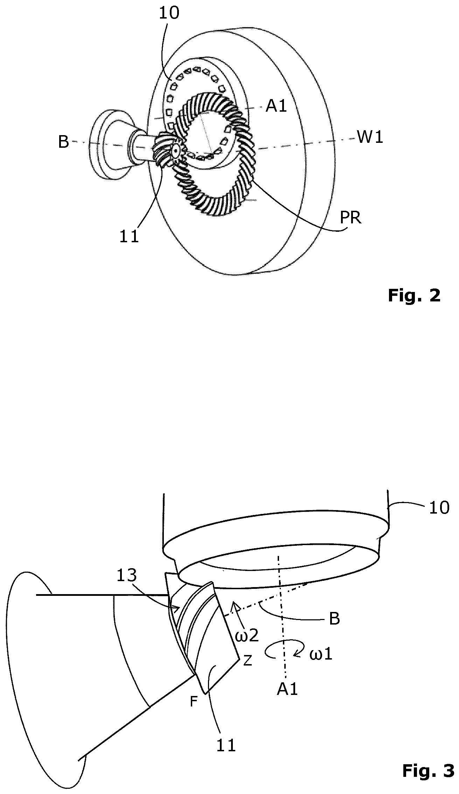

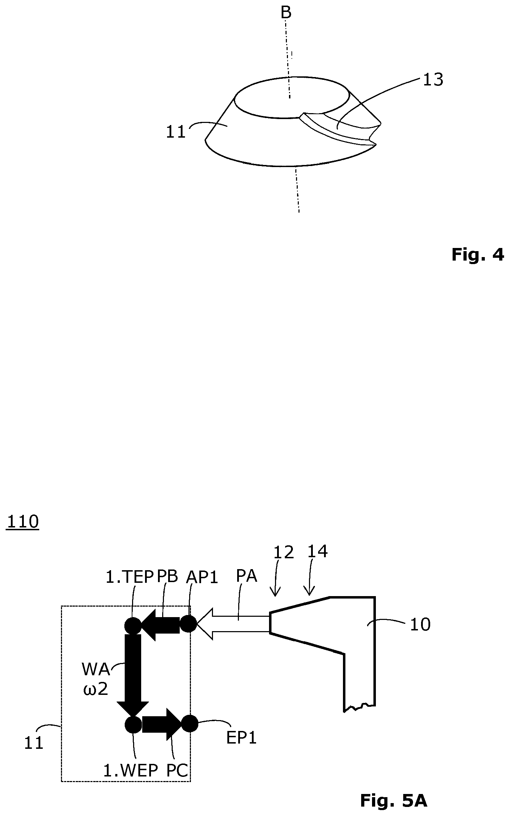

Die erwähnten Wälzvorgänge umfassen jeweils eine Überlagerung von Relativbewegungen. Details hierzu sind z.B. den Seiten 76-77 und der Abbildung 3.5 des Buches "Kegelräder; Grundlagen, Anwendungen", J. Klingelnberg, Springer-Verlag, 2008, zu entnehmen. Ähnliche Illustrationen, wie in Fig. 1A, 1B und in den Figuren 5A - 5C verwendet werden, sind z.B. auch aus diesem Buch (siehe Seiten 292 - 295) bekannt.

Die Abbildung 3.5 des genannten Buches ist in den Zeichnungen als Fig. 2 enthalten. In der Fig. 2 ist neben dem Verzahnungswerkzeug 10 (hier in Form eines Messerkopfes) und dem Kegelrad-Werkstück 11 auch das virtuelle Planrad PR gezeigt. Der Wälzvorgang umfasst eine Drehung des Verzahnungswerkzeugs 10 um die Werkzeugspindelachse A1 (um eine Schnittbewegung zu erzeugen) und ein Schwenken oder Drehen um die Wälzwiegenachse W1 (hier Wälzdrehung genannt), die mit der Planradachse zusammen fällt. Das Schwenken oder Drehen um die Wälzwiegenachse W1 wird meistens durch einen Wälzwiegen-Winkelbereich definiert. Außerdem kommt eine Drehbewegung des Kegelrad-Werkstücks 11 um die Werkstückspindelachse B hinzu.

Die genannten Bewegungen finden im 3-dimensionalen Raum statt. Die schematischen Darstellungen, wie sie in Fig. 1A, 1B gezeigt sind, können daher nur die grundlegenden Aspekte eines solchen Prozesses 1 darstellen.

Um diesen Vorgang 3-dimensional illustrieren zu können, ist in Fig. 3 beispielhaft eine perspektivische Ansicht eines Kegelrad-Werkstücks 11 (hier in Form eines Ritzels) und einer Topfschleifscheibe 10 gezeigt. In Fig. 3 ist eine Momentaufnahme kurz vor dem Erreichen der Wälz-Endposition WEP der Zahnlücke 13 gezeigt. Die Zahnlücken 13 des Kegelrad-Werkstücks 11 werden in diesem Beispiel eine nach der anderen von der Ferse F zur Zehe Z hin geschliffen, d.h. das Eintauchen P2 und P6 erfolgt für jede Zahnlücke 13 im Bereich der Ferse F am Profilwälzwinkel-Ferse und die Rückzugsbewegungen P4, P8 erfolgen für jede Zahnlücke 13 im Bereich der Zehe Z am Profilwälzwinkel-Zehe.

Der Verschleiß an der Topfschleifscheibe 10 ist jedoch beim zuvor beschriebenen Prozess 1 recht groß und die Topfschleifscheibe 10 muss häufig abgerichtet werden. Vor allem hat sich gezeigt, dass der Verschleiß im Bereich des Profilkopfes 12 (siehe Fig. 1A, 1B) der Topfschleifscheibe 10 groß ist, da hier die größten Kräfte und Belastungen auftreten.

Es ist eine Aufgabe der Erfindung ein Verfahren bereit zu stellen, das geeignet ist die beispielhaft beschriebenen Wälzverfahren des Standes der Technik produktiver zu machen und den Verschleiß an der Topfschleifscheibe bzw. am Fräswerkzeug zu reduzieren.

Gemäß Erfindung wird ein Verfahren gemäß Anspruch 1 vorgeschlagen, das speziell zum Verzahnen von Kegelrad-Werkstücken in einer Verzahnungsmaschine ausgelegt ist, wobei das Verfahren ein Vorbearbeitungsphase (z.B. als Schruppbearbeitung) und eine nachfolgende Nachbearbeitungsphase (z.B. als Schlichtbearbeitung) umfasst. Die Vorbearbeitungsphase und die Nachbearbeitungsphase erfolgen beide in derselben Aufspannung des Kegelrad-Werkstücks.

Die Vorbearbeitungsphase umfasst gemäß Erfindung stets mindestens ein einstufiges (Tauch-)Wälzverfahren. Die Vorbearbeitungsphase kann gemäß Erfindung aber auch ein mehrstufiges (Tauch-)Wälzverfahren umfassen. Dieses ein- oder mehrstufige (Tauch-)Wälzverfahren wird durchgeführt, um durch Bearbeitung mit einem Verzahnungswerkzeug mindestens eine Zahnlücke an dem Kegelrad-Werkstück zu bearbeiten. Das Wälzverfahren der Vorbearbeitungsphase umfasst bei allen Ausführungsformen
- mindestens einen ersten Bearbeitungsvorgang, bei dem
   - eine erste relative Zustellbewegung durchgeführt wird, um das Verzahnungswerkzeug in eine erste Ausgangsposition relativ zu dem Kegelrad-Werkstück zu bringen,
   - das Verzahnungswerkzeug um eine Werkzeugspindelachse der Verzahnungsmaschine drehangetrieben wird,
   - das Verzahnungswerkzeug relativ zum Kegelrad-Werkstück, ausgehend von der ersten Ausgangsposition bis zu einer ersten Endposition in Material des Kegelrad-Werkstücks eindringt, und
   - bei dem das Verzahnungswerkzeug und das Kegelrad-Werkstück einen ersten Wälzvorgang in einem ersten Wälzbereich durchführen.

Falls die Vorbearbeitungsphase ein mehrstufiges (Tauch-) Wälzverfahren umfasst, dann kann sie zusätzlich zu dem ersten Bearbeitungsvorgang umfassen:
einen zweiten Bearbeitungsvorgang, bei dem
- das Verzahnungswerkzeug (weiter) um die Werkzeugspindelachse der Verzahnungsmaschine drehangetrieben wird,
- das Verzahnungswerkzeug relativ zum Kegelrad-Werkstück, ausgehend von einer zweiten Ausgangsposition bis zu einer zweiten Endposition in das Material des Kegelrad-Werkstücks eindringt, und
- bei dem das Verzahnungswerkzeug und das Kegelrad-Werkstück einen zweiten Wälzvorgang in einem zweiten Wälzbereich durchführt,
wobei sich der erste Wälzbereich und der zweite Wälzbereich unterscheiden.

Die Nachbearbeitungsphase umfasst bei allen Ausführungsformen stets mindestens die folgenden Schritte:
- Durchführen eines weiteren Wälzvorgangs ausgehend von einer dritten (weiteren) Ausgangsposition, um mit einem Verzahnungswerkzeug mindestens eine der Zahnlücken an dem Kegelrad-Werkstück nach zu bearbeiten, wobei im Rahmen dieses weiteren Wälzvorgangs eine Wälzdrehung in einem dritten Wälzbereich durchgeführt wird wobei die erste Ausgangsposition des ersten Bearbeitungsvorgangs einen anderen Wälzwiegenwinkel aufweist als die dritte (weitere) Ausgangsposition der Nachbearbeitungsphase.

D.h., es wird vor der Nachbearbeitungsphase ein anderer Wälzwiegenwinkel eingestellt, als zu Beginn des ersten Bearbeitungsvorgangs.

Der dritte Wälzbereich kann bei mindestens einem Teil der Ausführungsformen einen Einlaufbereich und/oder einen Auslaufbereich umfassen.

Das Verzahnen von Kegelrad-Werkstücken kann gemäß Erfindung das Fräsen von Verzahnungen sowie das Schleifen von Verzahnungen an einem Kegelrad-Werkstück in einer als Verzahnungsmaschine dienenden Fräs- oder Schleifmaschine umfassen.

Vorzugsweise dient bei allen Ausführungsformen die Vorbearbeitungsphase zum Vorverzahnen oder Schruppen von Zahnlücken.

Das Vorverzahnen oder Schruppen kann z.B. bei allen Ausführungsformen mit einem Fräswerkzeug (z.B. mit einem Stabmesserkopf) erfolgen.

Vorzugsweise dient bei allen Ausführungsformen die Nachbearbeitungsphase zum Nachbearbeiten oder Schlichten von Zahnlücken, die zuvor vorverzahnt oder geschruppt wurden.

Das Nachbearbeiten oder Schlichten kann z.B. bei allen Ausführungsformen mit einem Schleifwerkzeug (z.B. mit einer Topfschleifscheibe) erfolgen.

Vorzugsweise kommt bei allen Ausführungsformen ein kombiniertes Wälzverfahren zum Einsatz, bei dem im Rahmen einer Vorbearbeitungsphase (oder Vorverzahnungsphase) die Zahnlücken des Kegelrad-Werkstücks nicht vollständig durchgewälzt werden. Im Rahmen der Nachbearbeitungsphase wird das Kegelrad-Werkstück jedoch vollständig durchgewälzt.

Bei allen Ausführungsformen wird zwischen der Vorbearbeitungsphase (oder Vorverzahnungsphase) und der Nachbearbeitungsphase ein Material-Aufmass stehen gelassen, das dann in der Nachbearbeitungsphase abgetragen wird. Bei dem Material-Aufmass kann es sich um ein Tiefenaufmass und/oder um ein Flankenaufmass handeln.

Vorzugsweise umfasst die Vorbearbeitungsphase bei allen Ausführungsformen ein mehrstufiges (Tauch-)Wälzverfahren mit mindestens zwei unterschiedlichen Bearbeitungsvorgängen.

Jeder Bearbeitungsvorgang der Vorbearbeitungsphase umfasst eine Relativbewegung, die dazu dient das Verzahnungswerkzeug in das Kegelrad-Werkstück einzutauchen oder einzustechen. D.h. es wird bei dieser Relativbewegung Material an dem Kegelrad-Werkstück abgetragen.

Das Eintauchen oder Einstechen erfolgt vorzugsweise bei allen Ausführungsformen so, dass die Tauchendposition im Material des Kegelrad-Werkstücks liegt. D.h. das Verzahnungswerkzeug bewegt sich in das Material des Kegelrad-Werkstücks hinein.

Jeder Bearbeitungsvorgang der Vorbearbeitungsphase umfasst eine Wälzdrehung, die ein Drehen des Kegelrad-Werkstücks relativ zum Verzahnungswerkzeug innerhalb eines Wälzbereichs umfasst.

Die Wälzdrehung eines ersten Bearbeitungsvorgangs erfolgt bei allen Ausführungsformen zum Beispiel in einem ersten Wälzbereich, wohingegen die Wälzdrehung eines zweiten Bearbeitungsvorgangs, falls ein solcher vorgesehen ist, in einem zweiten Wälzbereich erfolgt. Der erste Wälzbereich unterscheidet sich bei allen Ausführungsformen von dem zweiten Wälzbereich. Entweder ist der erste Wälzbereich kürzer als der zweite Wälzbereich, oder der erste Wälzbereich ist länger als der zweite Wälzbereich. Die Begriffe "kürzer" oder "länger" beziehen sich auf einen Winkelbereich oder auf eine Strecke, die durchwälzt wird.

Die Vorbearbeitungsphase kann bei allen Ausführungsformen der Erfindung zwei unterschiedliche Wälzvorgänge umfassen. Als unterschiedliche Wälzvorgänge werden im vorliegenden Zusammenhang Wälzvorgänge bezeichnet,
- die sich durch ihre Ausgangspositionen und/oder Endpositionen unterscheiden, und/oder
- bei denen die Wälzvorgänge unterschiedlich lang sind (z.B. in Winkelgraden des Wälzwiegenwinkels gemessen), und/oder
- die mit unterschiedlichen Tiefenzustellungen des Verzahnungswerkzeugs (z.B. der Topfschleifscheibe oder des Messerkopfes) relativ zum Kegelrad-Werkstück durchgeführt werden, und/oder
- die sich durch ihre Ausgangspositionen und ihre Wälzgeschwindigkeiten oder durch ihre Endpositionen und ihre Wälzgeschwindigkeiten unterscheiden, und/oder
- die nicht, wie dies im Stand der Technik üblich ist, komplett vom Wälzanfang (am Profilwälzwinkel-Zehe oder Profilwälzwinkel-Ferse) bis zum Wälzende (am Profilwälzwinkel-Ferse oder am Profilwälzwinkel-Zehe) durchwälzen. D.h. bei dem/den Wälzvorgängen der Vorbearbeitungsphase werden weder der Profilwälzwinkel-Zehe noch der Profilwälzwinkel-Ferse erreicht.

Die Nachbearbeitungsphase umfasst bei allen Ausführungsformen einen Wälzvorgang, bei dem der Profilwälzwinkel-Zehe und der Profilwälzwinkel-Ferse erreicht werden. D.h. der dritte Wälzbereich kann sich bei mindestens einem Teil der Ausführungsformen vom Profilwälzwinkel-Zehe bis zum Profilwälzwinkel-Ferse oder umgekehrt erstrecken.

Falls der dritte Wälzbereich einen Einlaufbereich und/oder einen Auslaufbereich umfasst, so kann sich der dritte Wälzbereich um ein kleines Stück über den Profilwälzwinkel-Zehe oder den Profilwälzwinkel-Ferse hinaus erstrecken.

Durch die Erfindung wird das Verzahnen wirtschaftlicher gemacht.

Ausserdem ergibt sich durch die Erfindung ein Standzeitgewinn am Werkzeug.

Vorzugsweise geht es hier um das Schruppen gewälzter Zahnlücken und das anschliessende Schlichten gewälzter Zahnlücken.

Die Vorbearbeitungsphase der Erfindung kann zum Fräsen oder Schleifen von Zahnlücken am vollen Material (d.h. am nicht-vorverzahnten Material) des Kegelrad-Werkstücks vorgenommen werden.

Die Nachbearbeitungsphase der Erfindung wird hingegen an den vorverzahnten Zahnlücken des Kegelrad-Werkstücks vorgenommen.

Gemäß Erfindung kann bei allen Ausführungsformen das Aufteilen des Wälzens der Vorbearbeitungsphase in zwei oder mehr als zwei Wälzvorgänge dazu genutzt werden, um im Rahmen eines ersten Wälzvorganges die (dynamische) Belastung des Verzahnungswerkzeugs (z.B. der Topfschleifscheibe oder des Stabmesserkopfes) zu reduzieren und um im Rahmen eines zweiten Wälzvorganges nahezu die endgültige Flankengeometrie am Kegelrad-Werkstück bereitzustellen. Die endgültige Flankengeometrie wird dann im Rahmen der Nachbearbeitungsphase erzeugt.

Gemäß Erfindung umfasst das mehrstufigen Tauch-Wälzverfahren der Vorbearbeitungsphase bei allen Ausführungsformen ein schrittweises Eintauchen in das Material des Kegelrad-Werkstücks (mit zwei oder mehr als zwei Schritten), um den Verschleiss am Verzahnungswerkzeug zu reduzieren.

Vorzugsweise handelt es sich bei allen Ausführungsformen bei dem ersten und zweiten Wälzvorgang um einen Wälzvorgang mit partiellem Durchwälzen und bei dem dritten Wälzvorgang um einen Wälzvorgang mit komplettem Durchwälzen.

Als partielles Durchwälzen wird hier ein Wälzvorgang bezeichnet,
- der einen Wälzbereich oder Wälzweg durchläuft, der kürzer ist als der Wälzbereich oder Wälzweg des kompletten Durchwälzens (d.h. es wird nicht der komplette Profilwälzbereich durchgewälzt), und/oder
- bei dem der Wälzvorgang von einer Ausgangsposition ausgeht, die innerhalb des Profilwälzbereichs liegt.

Gemäß Erfindung kann das mehrstufige Tauch-Wälzverfahren auch eine Änderung der Drehgeschwindigkeit des Verzahnungswerkzeugs und/oder eine Änderung der Geschwindigkeit der Relativbewegung(en) umfassen, um den Verschleiss an dem Verzahnungswerkzeug zu reduzieren und die Effizienz des Verfahrens zu erhöhen.

Es kann z.B. bei allen Ausführungsformen eine Änderung der Wälzgeschwindigkeit beim Wälzen durch eine Zahnlücke vorgenommen werden. Zu diesem Zweck kann ein Wälzgeschwindigkeitsverlauf vorgegeben werden.

Es kann z.B. bei allen Ausführungsformen eine Änderung der Tauchgeschwindigkeit beim Tauchen in das Material des Kegelrad-Werkstücks vorgenommen werden. Zu diesem Zweck kann bei diesen Ausführungsformen ein Tauchgeschwindigkeitsverlauf vorgegeben werden.

Dieses Anpassen/Ändern der Wälzgeschwindigkeit beim Wälzen durch eine Zahnlücke kann hier vorgenommen werden, um den Verschleiss an dem Verzahnungswerkzeug zu reduzieren.

Die Erfindung kann vor allem für die Prototypen- und Kleinserienfertigung von Kegelrädern eingesetzt werden. Die Erfindung kann aber auch in anderen Zusammenhängen und unter anderen Randbedingungen technisch und/oder wirtschaftlich sinnvoll sein.

### ZEICHNUNGEN

Ein Ausführungsbeispiel der Erfindung wird im Folgenden unter Bezugnahme auf die Zeichnungen näher beschrieben.
- **FIG. 1A**: zeigt eine schematische Illustration eines Verfahrens gemäß Stand der Technik, das zum Vorbearbeiten von gewälzten Zahnlücken dient;
- **FIG. 1B**: zeigt eine schematische Illustration des Verfahrens der Fig. 1A, das zum Nachbearbeiten der gewälzten Zahnlücken dient;
- **FIG.** 2: zeigt eine schematische Illustration eines virtuellen Planrades einer Kegelrad-Verzahnmaschine zusammen mit einem Kegelradwerkstück und einem Verzahnungswerkzeug;
- **FIG. 3**: zeigt eine schematische Perspektivdarstellung eines Tiefschleifverfahrens eines Kegelrad-Ritzels gemäß Stand der Technik;
- **FIG. 4**: zeigt eine schematische Perspektivdarstellung eines Kegelrad-Ritzels und einer Zahnlücke, die an diesem Kegelrad-Ritzel erzeugt wurde;
- **FIG. 5A**: zeigt eine schematische Illustration möglicher Teilschritte eines ersten Bearbeitungsvorgangs der Erfindung;
- **FIG. 5B**: zeigt eine schematische Illustration möglicher Teilschritte eines optionalen zweiten Bearbeitungsvorgangs der Erfindung;
- **FIG. 5C**: zeigt eine schematische Illustration möglicher Teilschritte einer Nachbearbeitungsphase der Erfindung;
- **FIG. 6**: zeigt eine perspektivische Ansicht einer Schleifmaschine, in der das Verfahren der Erfindung zum Einsatz kommen kann.

Es geht um ein Verfahren, das speziell zum Fräsen oder Schleifen von Verzahnungen an einem Kegelrad-Werkstück 11 in einer Verzahnungsmaschine 100 entwickelt wurde.

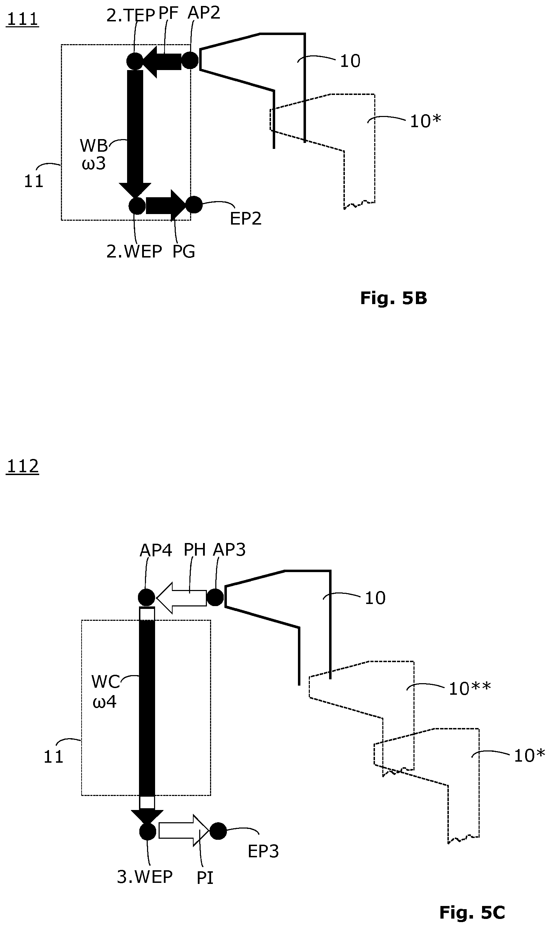

In den Figuren 5A bis 5C sind beispielhafte Teilschritte einer Ausführungsformen des Verfahrens gezeigt. Es handelt sich hier um ein Verfahren, bei dem im Rahmen der Vorbearbeitungsphase zwei Bearbeitungsvorgänge durchgeführt werden. Der zweite Bearbeitungsvorgang, der in Fig. 5B gezeigt ist, ist optional.

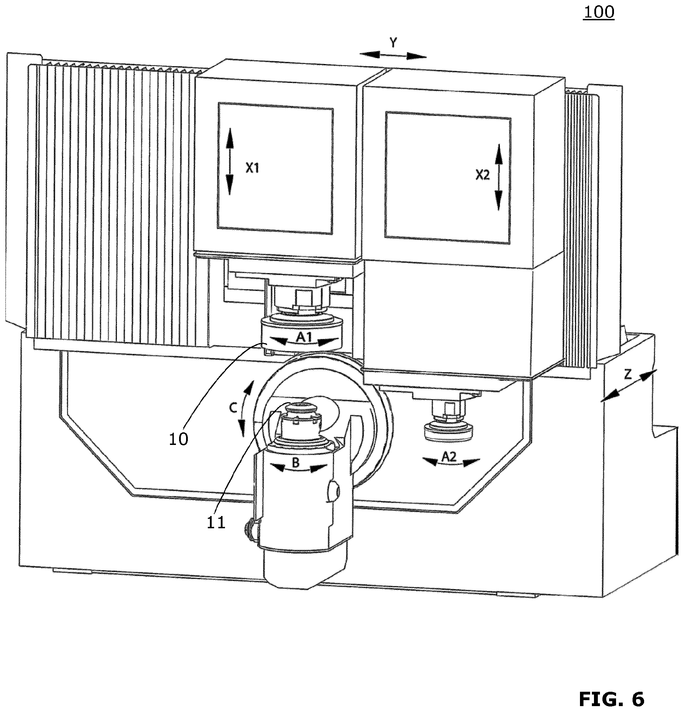

Fig. 6 zeigt eine perspektivische Ansicht einer Schleifmaschine 100, in der das Verfahren der Erfindung zum Einsatz kommen kann. Die Erfindung kann jedoch auch in anderen Verzahnungsmaschinen 100 zum Einsatz kommen.

Eine Ausführungsform des Verfahrens der Erfindung umfasst die folgenden Schritte, die unter Verweis auf die Figuren 5A bis 5C beschrieben werden. In den Figuren 5A bis 5C wurde ein Darstellungsformat gewählt, das abgeleitet wurde von den Darstellungen im eingangs erwähnten Buch "Kegelräder; Grundlagen, Anwendungen".

Das Verfahren kann mit dem Durchführen einer relativen Zustellbewegung PA beginnen, um eine Topfschleifscheibe 10 (oder ein anderes Verzahnungswerkzeug 10) in eine Ausgangsposition AP1 relativ zu dem Kegelrad-Werkstück 11 zu bringen. Diese Ausgangsposition AP1 ist unter anderem durch einen ersten Wälzwiegenwinkel definiert. Im Folgenden ist generell von Verzahnungswerkzeugen 10 die Rede, auch wenn in den Figuren beispielhaft eine Topfschleifscheibe 10 gezeigt ist. Gleichzeitig oder nach dem Erreichen der Ausgangsposition AP1 wird das Verzahnungswerkzeug 10 um eine Werkzeugspindelachse A1 der Verzahnungsmaschine 100 drehangetrieben. Die relative Zustellbewegung PA kann unter Einsatz einer oder mehrerer Achsen der Verzahnungsmaschine 100 erfolgen. Die Zustellbewegung PA kann eine lineare Bewegung sein oder sie kann einer gekrümmten Bahn folgen. Die Zustellbewegung PA kann auch mehrere lineare und/oder gekrümmte Bewegungen umfassen.

Die Zustellbewegung PA ist vorzugsweise bei allen Ausführungsformen eine nicht-produktive Bewegung. Der Blockpfeil PA ist daher weiss dargestellt.

Ab der Ausgangsposition AP1 in Fig. 5A kann bei allen Ausführungsformen ein Tauch-Wälzverfahren eines ersten Bearbeitungsvorganges 110 beginnen, um durch Schleifen oder Fräsen mindestens eine Zahnlücke 13 im Material des Kegelrad-Werkstücks 11 zu erzeugen. Dieses Tauch-Wälzverfahren umfasst mindestens die folgenden Teilprozesse. Durch die Verwendung der Zahlwörter "erst..", "zweit.." usw., soll keine chronologische Reihenfolge festgelegt werden. Diese Zahlwörter dienen vielmehr der einfacheren Benennung der einzelnen Vorgänge.

Im Rahmen eines ersten Tauchvorgangs PB erfolgt das Eindringen des Verzahnungswerkzeugs 10 in das Material des Kegelrad-Werkstücks 11. Es handelt sich hier um einen produktiven ersten Tauchvorgang PB. Das Eindringen beginnt an der Ausgangsposition AP1 und erfolgt bis zu einer ersten Tauch-Endposition 1.TEP. Bei dem produktiven ersten Tauchvorgang PB wird durch Schleifen oder Fräsen Material abgehoben, wie in Fig. 5A durch den schwarzen Pfeil PB dargestellt. Der erste Tauchvorgang PB ergibt sich aus einer oder mehreren relativen Bewegungen einer oder mehrerer Achsen der Verzahnungsmaschine 100. Der erste Tauchvorgang PB kann eine lineare Bewegung sein oder er kann einer gekrümmten Bahn folgen. Der erste Tauchvorgang PB kann auch mehrere lineare und/oder gekrümmte Bewegungen umfassen.

Nun kann z.B., wie in Fig. 5A gezeigt, ein erster Wälzvorgang WA folgen, bei dem das Verzahnungswerkzeug 10 und das Kegelrad-Werkstück 11 Relativbewegungen mit überlagerter Wälzdrehung ω2 ausführen. In Fig. 3 ist eine entsprechende Wälzdrehung ω2 beispielhaft gezeigt. Die Wälzdrehung ω2, wie sie im Rahmen der Erfindung zum Einsatz kommt, bezieht sich auf eine Drehbewegung des Kegelrad-Werkstücks 11 um die Werkstückspindelachse B. Die Relativbewegungen des Wälzvorgangs WA mit überlagerter Wälzdrehung ω2 führen zu einer komplexen 3-dimensionalen Bewegung des Verzahnungswerkzeugs 10 relativ zum Kegelrad-Werkstück 11. In Fig. 5A ist dieser komplexe Bewegungsablauf durch den schwarzen Pfeil WA symbolisiert. Am Ende des Wälzvorgangs WA wird eine erste Wälz-Endposition 1.WEP erreicht.

Nun kann bei allen Ausführungsformen z.B., wie in Fig. 5A gezeigt, eine relative Austauchbewegung PC bis zu einer ersten Endposition EP1 erfolgen. Die Austauchbewegung PC kann eine lineare Bewegung sein oder sie kann einer gekrümmten Bahn folgen. Die Austauchbewegung PC kann auch mehrere lineare und/oder gekrümmte Bewegungen umfassen. Die Austauchbewegung PC kann sich auch aus einer oder mehreren relativen Bewegungen einer oder mehrerer Achsen der Verzahnungsmaschine 100 ergeben.

Die Austauchbewegung PC kann bei allen Ausführungsformen eine produktive oder nicht-produktive Bewegung sein.

Die weiteren Schritte, die im Rahmen der Vorbearbeitungsphase allesamt an derselben Zahnlücke 13 durchgeführt werden können wie die Schritte der Fig. 5A, sind nun in Fig. 5B gezeigt. Dieser Vorgang wird hier als Lücke-für-Lücke Bearbeitung bezeichnet, da jede Lücke 13 des Kegelrad-Werkstücks 11 allen Teilschritten der Figuren 5A und 5B unterzogen wird, bevor eine nächste Zahnlücke entsprechend vorbearbeitet wird. Die Teilschritte der Fig. 5B sind optional. Das Verfahren der Erfindung kann somit nach dem Ausführen der Schritte der Fig. 5A auch direkt zu den Schritten der Fig. 5C übergehen.

Es ist aber gemäß Erfindung auch möglich nach den Schritten der Fig. 5A eine Teilungsdrehung des Kegelrad-Werkstücks 11 um die Werkstückspindelachse B vorzunehmen, um dann eine nächste Zahnlücke 13 des Kegelrad-Werkstücks 11 gemäß Fig. 5A vor zu bearbeiten. Dieser Vorgang kann wiederholt werden, bis alle Zahnlücken 13 gemäß Fig. 5A vorbearbeitet wurden. Dann können Zahnlücke 13 für Zahnlücke 13 die Schritte der Fig. 5B oder auch direkt die Schritte der Fig. 5C folgen. Dieser Vorgang wird hier als lückenübergreifend bezeichnet.

Es ist aber gemäß Erfindung auch möglich nach den Schritten der Fig. 5A die Schritte der Fig. 5B an derjenigen Zahnlücke 13 durchzuführen, die zuvor den Schritten der Fig. 5A unterzogen wurde. In diesem Fall erfolgt erst nach den Schritten der Fig. 5B eine Teilungsdrehung des Kegelrad-Werkstücks 11 um die Achse B.

Es ist aber gemäß Erfindung auch möglich nach den Schritten der Fig. 5A und den Schritten der Fig. 5B die Schritte der Fig. 5C durchzuführen, bevor eine Teilungsdrehung des Kegelrad-Werkstücks 11 um die Achse B erfolgt, um die Schritte der Figuren 5A bis 5C an einer nächsten Zahnlücke 13 durchzuführen.

Wie in Fig. 5B gezeigt, kann bei allen Ausführungsformen im Rahmen eines optionalen zweiten Bearbeitungsvorgangs 111 eine relative Eintauch- oder Einstechbewegung PF durchgeführt werden, um das Verzahnungswerkzeug 10 relativ zum Kegelrad-Werkstück 11 von einer zweiten Ausgangsposition AP2 bis zu einer weiteren Tauch-Endposition 2.TEP in das Material eindringen zu lassen. diese Eintauch- oder Einstechbewegung PF kann eine lineare Bewegung sein oder sie kann einer gekrümmten Bahn folgen. Sie kann auch mehrere lineare und/oder gekrümmte Bewegungen umfassen. Die Bewegung PF kann sich auch aus einer oder mehreren relativen Bewegungen einer oder mehrerer Achsen der Verzahnungsmaschine 100 ergeben.

Nun kann z.B., wie in Fig. 5B gezeigt, ein zweiter Wälzvorgang WB folgen, bei dem das Verzahnungswerkzeug 10 und das Kegelrad-Werkstück 11 die Relativbewegungen eines Wälzvorgangs mit überlagerter Wälzdrehung ω3 ausführen. Der zweite Wälzvorgang WB ist bei dem gezeigten Ausführungsbeispiel länger als der erste Wälzvorgang WA, wie durch die unterschiedlich langen Blockpfeile WA und WB angedeutet. Der erste Wälzvorgang WA kann aber auch länger sein als der zweite Wälzvorgang WB.

Die entsprechenden Relativbewegungen mit überlagerter Wälzdrehung ω3 führen zu einer komplexen 3-dimensionalen Bewegung des Verzahnungswerkzeugs 10 relativ zum Kegelrad-Werkstück 11. In Fig. 5B ist dieser komplexe Bewegungsablauf durch den schwarzen Pfeil WB symbolisiert. Am Ende des Wälzvorgangs WB wird eine zweite Wälz-Endposition 2.WEP erreicht.

Mindestens ein Teil der Ausführungsformen der Erfindung umfasst mindestens zwei unterschiedliche Wälzvorgänge WA und WB. Als unterschiedliche Wälzvorgänge WA und WB werden im vorliegenden Zusammenhang Wälzvorgänge bezeichnet,
- die sich durch ihre Ausgangspositionen (1.TEP, 2.TEP) und/oder Endpositionen (1.WEP, 2.WEP) unterscheiden, und/oder
- bei denen die Wälzvorgänge WA, WB unterschiedlich lang sind (z.B. in Winkelgraden des Wälzwiegenwinkels gemessen), und/oder
- die mit unterschiedlichen Tiefenzustellungen PB, PF des Verzahnungswerkzeugs 10 (z.B. der Topfschleifscheibe) relativ zum Kegelrad-Werkstück 11 durchgeführt werden (d.h. der Pfeil PF ist z.B. länger als der Pfeil PB), und/oder
- die sich durch ihre Ausgangspositionen (1.TEP, 2.TEP) und ihre Wälzgeschwindigkeiten oder durch ihre Endpositionen (1.WEP, 2.WEP) und ihre Wälzgeschwindigkeiten unterscheiden, und/oder
- die nicht, wie dies im Stand der Technik üblich ist, komplett von einem Wälzanfang AP4 bis zum Wälzende 3.WEP durchwälzen, wie dies in der Nachbearbeitungsphase 112 (siehe Fig. 5C) erfolgt.

Nun kann z.B., wie in Fig. 5B gezeigt, eine relative Austauchbewegung PG bis zu einer zweiten Endposition EP2 erfolgen.

Die Austauchbewegung PG kann bei allen Ausführungsformen eine lineare Bewegung sein oder sie kann einer gekrümmten Bahn folgen. Die Austauchbewegung PG kann auch mehrere lineare und/oder gekrümmte Bewegungen umfassen. Die Bewegung PG kann sich auch aus einer oder mehreren relativen Bewegungen einer oder mehrerer Achsen der Verzahnungsmaschine 100 ergeben.

Die Austauchbewegung PG kann bei allen Ausführungsformen eine produktive oder nicht-produktive Bewegung sein.

Bei einer Lücke-für-Lücke Bearbeitung erfolgt nun die Nachbearbeitungsphase 112 der Fig. 5C.

Wie in Fig. 5C gezeigt, umfasst die Nachbearbeitungsphase 112 bei allen Ausführungsformen eine Bewegung PH, um das Verzahnungswerkzeug 10 relativ zum Kegelrad-Werkstück 11 z.B. von einer dritten Ausgangsposition AP3 bis zu einer vierten Ausgangsposition AP4 ausserhalb des Materials zuzustellen. Diese dritte Ausgangsposition AP3 unterscheidet sich von der ersten Ausgangsposition AP1 durch den Wälzwiegenwinkel. D.h. der der Wälzvorgang WC der Nachbearbeitungsphase 112 geht von einem anderen Wälzwiegenwinkel aus als der Wälzvorgang WA.

Diese Bewegung PH kann eine lineare Bewegung sein oder sie kann einer gekrümmten Bahn folgen. Sie kann auch mehrere lineare und/oder gekrümmte Bewegungen umfassen. Die Bewegung PH kann sich auch aus einer oder mehreren relativen Bewegungen einer oder mehrerer Achsen der Verzahnungsmaschine 100 ergeben.

Nun kann bei allen Ausführungsformen z.B., wie in Fig. 5C gezeigt, ein dritter Wälzvorgang WC folgen, bei dem das Verzahnungswerkzeug 10 und das Kegelrad-Werkstück 11 Relativbewegungen mit überlagerter Wälzdrehung ω4 ausführen. Der dritte Wälzvorgang WC ist bei dem gezeigten Ausführungsbeispiel länger als der erste Wälzvorgang WA (und als der zweite optionale Wälzvorgang WB), wie durch die unterschiedlich langen Blockpfeile WA, WB und WC angedeutet. Im Rahmen des dritten Wälzvorganges WC erfolgt ein komplettes Durchwälzen der entsprechenden Zahnlücke 13.

Der dritte Wälzbereich kann bei allen Ausführungsformen einen Einlaufbereich und/oder einen Auslaufbereich umfassen. Um dies in Fig. 5C darstellen zu können, weist der schwarze Blockpfeil WC am Wälzanfang (oben in Fig. 5C) und am Wälzende (unten in Fig. 5C) je einen weißen Bereich auf. Dadurch soll dargestellt werden, dass nicht der gesamte Wälzvorgang WC produktiv sein muss.

Im Vergleich der Figuren 5A, 5B und 5C ist auch zu erkennen, dass sich das Verzahnungswerkzeug 10 relativ zum Kegelrad-Werkstück 11 jeweils in einer unterschiedlichen Ausgangsposition befinden kann. Das Verzahnungswerkzeug ist in der Stellung der Fig. 5A in Fig. 5B und Fig. 5C mit dem Bezugszeichen 10* versehen. Das Verzahnungswerkzeug ist in der Stellung der Fig. 5B in Fig. 5C mit dem Bezugszeichen 10** versehen. Diese Art der Darstellung ist rein schematischer Natur und soll der besseren Verständlichkeit dienen.

In den Figuren 5A, 5B und 5C ist zusätzlich in schematischer Form ein Abschnitt des Materials des Kegelrad-Werkstücks 11 angedeutet. Auch diese Darstellung des Kegelrad-Werkstücks 11 ist rein schematischer Natur und soll der besseren Verständlichkeit dienen.

Bei einer Lücke-für-Lücke Bearbeitung erfolgt nach den Schritten der Fig. 5C eine Teilungsdrehung des Kegelrad-Werkstücks 11 und das Verfahren der Figuren 5A und 5C oder der Figuren 5A, 5B und 5C wiederholt sich nach dem Erreichen der nächsten Ausgangsposition AP1 mit dem Schritt PB.

Bei den Beispielen, die hier gezeigt und beschrieben werden, ist zu beachten, dass mindestens ein Teil der genannten Bewegungen überlagert ablaufen kann.

Der erste Wälzvorgang WA kann bei allen Ausführungsformen z.B. noch vor dem Erreichen der ersten Tauchendposition 1.TEP beginnen, um nur ein Beispiel zu nennen.

Der erste Wälzvorgang WA kann bei allen Ausführungsformen z.B. noch vor dem Erreichen der Position 1.WEP gestoppt werden, um ein weiteres Beispiel zu nennen.

Der zweite Wälzvorgang WB, falls vorhanden, kann bei allen Ausführungsformen z.B. noch vor dem Erreichen der zweiten Tauchendposition 2.TEP beginnen, um nur ein Beispiel zu nennen.

Der zweite Wälzvorgang WB, falls vorhanden, kann bei allen Ausführungsformen z.B. noch vor dem Erreichen der Position 2.WEP gestoppt werden, um ein weiteres Beispiel zu nennen.

Aufgrund einer Aufteilung der Schritte in mehrere Teilschritte oder Wälzvorgänge, können die Schleif- oder Schneidbedingungen an dem Verzahnungswerkzeug 10 optimiert werden. Bei dem Verfahren der Figuren 5A und 5B wird ein Teil der Abtragarbeit vom Profilkopf 12 der Topfschleifscheibe 10 auf die Seitenflanken 14 (siehe Fig. 5A) der Topfschleifscheibe 10 übertragen.

Alle Ausführungsformen umfassen mindestens eine relative Zustellbewegung (z.B. PA in Fig. 5A), um das Verzahnungswerkzeug 10 in eine Ausgangsposition (z.B. AP1 in Fig. 5A) relativ zu dem Kegelrad-Werkstück 11 zu bringen. Dieser Ausgangsposition ist ein erster Wälzwiegenwinkel zugeordnet. Gleichzeitig oder nach dem Erreichen der entsprechenden Ausgangsposition wird das Verzahnungswerkzeug 10 um die Werkzeugspindelachse A1 der Schleifmaschine 100 drehangetrieben (Drehgeschwindigkeit ω1 genannt), um die erforderliche Schnittgeschwindigkeit zu erreichen. Das Verzahnungswerkzeug 10 kann aber auch vom Verfahrensanfang bis zum Verfahrensende kontinuierlich drehangetrieben werden (mit gleichbleibender Geschwindigkeit oder mit veränderbarer Geschwindigkeit), um ein mehrfaches Anfahren und Abbremsen zu verhindern.

Die relativen Bewegungen können bei allen Ausführungsformen unter Einsatz einer oder mehrerer Achsen der Verzahnungsmaschine 100 erfolgen.

Die relativen Bewegungen können bei allen Ausführungsformen eine lineare Bewegung sein oder sie können einer gekrümmten Bahn folgen. Die relativen Bewegungen können bei allen Ausführungsformen auch mehrere lineare und/oder gekrümmte Bewegungen umfassen.

Gemäß Erfindung kann die Vorbearbeitungsphase optional ein schrittweises Eintauchen in das Material des Kegelrad-Werkstücks 11 vorsehen, um den Verschleiss an des Verzahnungswerkzeugs 10 zu reduzieren. In diesem Fall ist von einer mehrstufigen Vorbearbeitungsphase die Rede.

Gemäß Erfindung kann die mehrstufige Vorbearbeitungsphase auch eine Änderung der Drehgeschwindigkeit ω1 des Verzahnungswerkzeugs und/oder eine Änderung der Geschwindigkeit der Relativbewegung(en) umfassen, um den Verschleiss zu reduzieren und die Effizienz des Verfahrens zu erhöhen.

Wie bereits beschrieben, kann das mehrstufige Tauch-Wälzverfahren der Vorbearbeitungsphase separat für das Erzeugen jeder Zahnlücke 13 des Kegelrad-Werkstücks 11 durchgeführt werden, wobei das Kegelrad-Werkstück 11 jeweils eine Teilungsdrehung um die Werkstückspindelachse B der Verzahnungsmaschine 100 durchführt, bevor durch das erneute Ausführen der Teilprozesse der mehrstufigen Vorbearbeitungsphase eine weitere Zahnlücke 13 des Kegelrad-Werkstücks 11 erzeugt wird.

Die Teilprozesse der mehrstufigen Vorbearbeitungsphase können aber auch lückenübergreifend durchgeführt werden.

**Bezugszeichen**

| | |
|---|---|
| Verfahren des Standes der Technik | 1 |
| | |
| Verzahnungswerkzeug (z.B. Topfschleifscheibe oder Fräswerkzeug) | 10, 10*, 10** |
| Kegelrad-Werkstück | 11 |
| Profilkopf | 12 |
| Zahnlücke | 13 |
| Seitenflanken | 14 |
| | |
| Verzahnungsmaschine, Schleifmaschine, Fräsmaschine | 100 |
| | |
| erster Bearbeitungsvorgang | 110 |
| zweiter Bearbeitungsvorgang | 111 |
| Nachbearbeitungsphase | 112 |
| | |
| Werkzeugspindelachse | A1 |
| Ausgangsposition | AP, AP1, AP2, AP3, AP4 |
| Werkstückspindelachse | B |
| Endposition | EP1, EP2, EP3 |
| Ferse | F |
| Pfeile | P1, P2, P3, P4, P5, P6, P7, P8 |
| Pfeile | PA, PB, PC, PF, PG, PH, PI |
| Planrad | PR |
| Tauch-Endposition | TEP, 1.TEP, 2.TEP |
| Pfeile | WA, WB, WC |
| Wälz-Endposition | WEP, WEP1, 2.WEP, 3.WEP |
| Planrad-Achse | W1 |
| Zehe | Z |
| Rotation des Werkzeugs um die Werkzeugspindelachse | ω1 |
| Wälzdrehung des Kegelrad-Werkstücks um die Werkstückspindelachse | ω2, ω3, ω4 |

## Patentansprüche

1. Verfahren zum Verzahnen eines Kegelrad-Werkstücks (11) in einer Verzahnungsmaschine (100), wobei eine Vorbearbeitungsphase die folgenden Schritte umfasst:
- Durchführen eines Wälzverfahrens, um mit einem drehangetriebenen Verzahnungswerkzeug (10) mindestens eine Zahnlücke (13) an dem Kegelrad-Werkstück (11) zu bearbeiten, umfassend:
- mindestens einen ersten Bearbeitungsvorgang (110), bei dem
• eine erste relative Zustellbewegung (PA) durchgeführt wird, um das Verzahnungswerkzeug (10) in eine erste Ausgangsposition (AP1) relativ zu dem Kegelrad-Werkstück (11) zu bringen,
• das Verzahnungswerkzeug (10) relativ zum Kegelrad-Werkstück (11), ausgehend von der ersten Ausgangsposition (AP1) bis zu einer ersten Endposition (1.TEP) in Material des Kegelrad-Werkstücks (11) eindringt, und
• bei dem das Verzahnungswerkzeug (10) und das Kegelrad-Werkstück (11) einen ersten Wälzvorgang (WA) in einem ersten Wälzbereich durchführen,
wobei nach der Vorbearbeitungsphase ein Material-Aufmass stehen gelassen wird und wobei eine Nachbearbeitungsphase (112) die folgenden Schritte umfasst:
- Durchführen eines weiteren Wälzvorgangs (WC) ausgehend von einer weiteren Ausgangsposition (AP3), um mit dem drehangetriebenen Verzahnungswerkzeug (10) oder mit einem anderen drehangetriebenen Verzahnungswerkzeug mindestens eine der Zahnlücken (13) an dem Kegelrad-Werkstück (11) nach zu bearbeiten, wobei im Rahmen dieses weiteren Wälzvorgangs (WC) eine Wälzdrehung in einem weiteren Wälzbereich durchgeführt wird, dad
urch gekennzeichnet, dass die erste Ausgangsposition (AP1) einen anderen Wälzwiegenwinkel aufweist als die weitere Ausgangsposition (AP3), wobei im Rahmen der Nachbearbeitungsphase das Material-Aufmass abgetragen wird, um eine endgültige Flankengeometrie zu erzeugen.

2. Verfahren (100) nach Anspruch 1, **dadurch gekennzeichnet, dass** die Vorbearbeitungsphase
- einen zweiten Bearbeitungsvorgang (111) umfasst, bei dem
• das Verzahnungswerkzeug (10) relativ zum Kegelrad-Werkstück (11), ausgehend von einer zweiten Ausgangsposition (AP2) bis zu
einer zweiten Endposition (2.TEP) in das Material des Kegelrad-Werkstücks (11) eindringt, und
• bei dem das Verzahnungswerkzeug (10) und das Kegelrad-Werkstück (11) einen zweiten Wälzvorgang (WB) in einem zweiten Wälzbereich durchführen, wobei sich der erste Wälzvorgang (WA) und der zweite Wälzvorgang (WB) unterscheiden.

3. Verfahren (100) nach Anspruch 2, **dadurch gekennzeichnet, dass** es sich bei dem ersten Wälzvorgang (WA) und bei dem zweiten Wälzvorgang (WB) jeweils um ein partielles Durchwälzen und bei dem weiteren Wälzvorgang (WC) um ein komplettes Durchwälzen handelt.

4. Verfahren nach Anspruch 2 oder 3, **dadurch gekennzeichnet, dass** der zweite Bearbeitungsvorgang (111) eine zweite relative Zustellbewegung umfasst, um das Verzahnungswerkzeug (10) in die zweite Ausgangsposition (AP2) relativ zu dem Kegelrad-Werkstück (11) zu bringen.

5. Verfahren nach Anspruch 2 oder 3, **dadurch gekennzeichnet, dass** es sich bei dem Wälzverfahren um ein mehrstufiges Tauch-Wälzverfahren handelt, bei dem der erste Bearbeitungsvorgang (110), ausgehend von der ersten Ausgangsposition (AP1) bis zu der ersten Endposition (1.TEP) eine erste produktive Tauchbewegung (PB) umfasst, und bei dem der zweite Bearbeitungsvorgang (111), ausgehend von der zweiten Ausgangsposition (AP2) bis zu der zweiten Endposition (2.TEP), eine zweite produktive Tauchbewegung (PF) umfasst.

6. Verfahren nach einem der Ansprüche 2, 3 oder 4, **dadurch gekennzeichnet, dass** sich der erste Wälzvorgang (WA) und der zweite Wälzvorgang (WB) unterscheiden.

7. Verfahren nach einem der Ansprüche 1 bis 6, **dadurch gekennzeichnet, dass** der erste Wälzvorgang (WA) in einem anderen Wälzwiegen-Winkelbereich durchgeführt wird als der weitere Wälzvorgang (WC).

8. Verfahren nach einem der Ansprüche 1 bis 6, **dadurch gekennzeichnet, dass** der erste Wälzvorgang (WA) mit einem anderen Wälzwiegenwinkel beginnt als der weitere Wälzvorgang (WC).

9. Verfahren nach einem der Ansprüche 1 bis 6, **dadurch gekennzeichnet, dass** nach dem ersten Wälzvorgang (WA) ein Material-Aufmass an der Zahnlücke (13) des Kegelrad-Werkstücks (11) bestehen bleibt, wobei dieses Material-Aufmass im Rahmen des weiteren Wälzvorgangs (WC) abgetragen wird.

10. Verfahren nach einem der Ansprüche 1 bis 9, **dadurch gekennzeichnet, dass** Lücke-für-Lücke der erste Bearbeitungsvorgang (110) durchgeführt wird, bevor Lücke-für-Lücke der weitere Wälzvorgang (WC) folgt.

11. Verfahren nach einem der Ansprüche 1 bis 9, **dadurch gekennzeichnet, dass** das lückenübergreifend durchgeführt wird.

12. Verfahren nach einem der Ansprüche 1 bis 9, **dadurch gekennzeichnet, dass** im Rahmen des ersten Bearbeitungsvorgangs (110) die Zahnlücken (13) aus dem vollen Material des Kegelrad-Werkstücks (11) erzeugt werden.

13. Verfahren nach Anspruch 12, **dadurch gekennzeichnet, dass** das Material des Kegelrad-Werkstücks (11) vor dem Durchführen des ersten Bearbeitungsvorgangs (110) nicht gehärtet wurde.

14. Verfahren nach einem der Ansprüche 1 bis 9, **dadurch gekennzeichnet, dass** es um das Schleifen oder Fräsen gewälzter Zahnlücken (13) geht.

15. Verfahren nach einem der Ansprüche 1 bis 9, **dadurch gekennzeichnet, dass** der dritte Wälzbereich größer ist als der Bereich, der durch die Profilwälzwinkel begrenzt wird.

## Claims

1. A method for gear cutting of a bevel gear workpiece (11) in a gear cutting machine (100), wherein a preliminary machining phase comprises the following steps:
- carrying out a rolling procedure, to machine at least one tooth gap (13) on the bevel gear workpiece (11) using a rotationally-driven gear cutting tool (10), comprising:
- at least one first machining procedure (110), in which
• a first relative infeed movement (PA) is carried out to move the gear cutting tool (10) into a first starting position (AP1) in relation to the bevel gear workpiece (11),
• the gear cutting tool (10) penetrates into the material of the bevel gear workpiece (11) in relation to the bevel gear workpiece (11), proceeding from a first starting position (AP1) up to a first end position (1.TEP), and
• in which the gear cutting tool (10) and the bevel gear workpiece (11) carry out a first rolling procedure (WA) in a first rolling range,
wherein a material allowance is left standing after the preliminary machining phase and wherein a post-machining phase (112) comprises the following steps:
- carrying out a further rolling procedure (WC) proceeding from a further starting position (AP3), in order to post-machine at least one of the tooth gaps (13) on the bevel gear workpiece (11) using the rotationally driven gear cutting tool (10) or using another rotationally driven gear cutting tool, wherein in the scope of this further rolling procedure (WC), a rolling rotation is carried out in a further rolling range,
**characterized in that** the first starting position (AP1) has a different cradle angle than the further starting position (AP3), wherein the material allowance is removed in the scope of the post-machining phase to generate a final flank geometry.

2. The method (100) according to claim 1, **characterized in that** the preliminary machining phase
- comprises a second machining procedure (111), in which
• the gear cutting tool (10) penetrates into the material of the bevel gear workpiece (11) in relation to the bevel gear workpiece (11) proceeding from a second starting position (AP2) up to a second end position (2.TEP), and
• in which the gear cutting tool (10) and the bevel gear workpiece (11) carry out a second rolling procedure (WB) in a second rolling range, wherein the first rolling procedure (WA) and the second rolling procedure (WB) differ.

3. The method (100) according to claim 2, **characterized in that** the first rolling procedure (WA) and the second rolling procedure (WB) each involve partial through rolling and the further rolling procedure (WC) involves complete through rolling.

4. The method according to claim 2 or 3, **characterized in that** the second machining procedure (111) comprises a second relative infeed movement, to move the gear cutting tool (10) into the second starting position (AP2) in relation to the bevel gear workpiece (11).

5. The method according to claim 2 or 3, **characterized in that** the rolling method is a multistage plunging-rolling method, in which the first machining procedure (110), proceeding from the first starting position (AP1) up to the first end position (1.TEP), comprises a first productive plunging movement (PB), and in which the second machining procedure (111), proceeding from the second starting position (AP2) up to the second end position (2.TEP), comprises a second productive plunging movement (PF).

6. The method according to any one of claims 2, 3, or 4, **characterized in that** the first rolling procedure (WA) and the second rolling procedure (WB) differ.

7. The method according to any one of claims 1 to 6, **characterized in that** the first rolling procedure (WA) is carried out in a different cradle angle range than the further rolling procedure (WC).

8. The method according to any one of claims 1 to 6, **characterized in that** the first rolling procedure (WA) begins with a different cradle angle than the further rolling procedure (WC).

9. The method according to any one of claims 1 to 6, **characterized in that**, after the first rolling procedure (WA), a material allowance remains standing on the tooth gap (13) of the bevel gear workpiece (11), wherein this material allowance is removed in the scope of the further rolling procedure (WC).

10. The method according to any one of claims 1 to 9, **characterized in that** the first machining procedure (110) is carried out gap-by-gap before the further rolling procedure (WC) follows gap-by-gap.

11. The method according to any one of claims 1 to 9, **characterized in that** it is carried out in a gap-spanning manner.

12. The method according to any one of claims 1 to 9, **characterized in that** the tooth gaps (13) are generated from the solid material of the bevel gear workpiece (11) in the scope of the first machining procedure (110).

13. The method according to claim 12, **characterized in that** the material of the bevel gear workpiece (11) was not hardened before carrying out the first machining procedure (110).

14. The method according to any one of claims 1 to 9, **characterized in that** it involves grinding or milling of rolled tooth gaps (13).

15. The method according to any one of claims 1 to 9, **characterized in that** the third rolling range is greater than the range which is delimited by the profile rolling angles.

## Revendications

1. Procédé de taillage en développante d'une pièce de roue conique (11) dans une machine à tailler les engrenages (100), dans lequel une étape de pré-usinage comprend les étapes suivantes consistant à :
- réaliser un procédé de taillage en développante pour usiner, à l'aide d'un outil à tailler les engrenages entraîné en rotation (10), au moins un entredent (13) sur la pièce de roue conique (11), comprenant :
- au moins un premier processus d'usinage (110), au cours duquel
• il est réalisé un premier mouvement d'avance relatif (PA) pour amener l'outil à tailler les engrenages (10) dans une première position de départ (AP1) par rapport à la pièce de roue conique (11),
• l'outil à tailler les engrenages (10), par rapport à la pièce de roue conique (11), pénètre dans la matière de la pièce de roue conique (11) depuis la première position de départ (AP1) jusqu'à une première position de fin (1.TEP), et
• l'outil à tailler les engrenages (10) et la pièce de roue conique (11) effectuent un premier processus de taillage en développante (WA) dans une première zone de taillage en développante,
dans lequel, après la phase de pré-usinage, il est laissé une surépaisseur de matière, et dans lequel une phase de ré-usinage (112) comprend les étapes suivantes consistant à :
- réaliser un autre processus de taillage en développante (WC) à partir d'une autre position de départ (AP3) pour retoucher, avec l'outil à tailler les engrenages entraîné en rotation (10) ou avec un autre outil de taillage en développante entraîné en rotation, au moins un des entredents (13) sur la pièce de roue conique (11), dans le cadre de cet autre processus de taillage en développante (WC), une rotation de taillage en développante étant effectuée dans une autre zone de taillage en développante,
**caractérisé en ce que** la première position de départ (AP1) présente un angle de basculement de taillage en développante différent de l'autre position de départ (AP3), dans lequel, dans le cadre de la phase de ré-usinage, la surépaisseur de matière est éliminée pour produire une géométrie de flanc définitive.

2. Procédé (100) selon la revendication 1, **caractérisé en ce que** la phase de pré-usinage
- comprend un deuxième processus d'usinage (111) au cours duquel
- l'outil à tailler les engrenages (10), par rapport à la pièce de roue conique (11), pénètre dans la matière de la pièce de roue conique (11) depuis une deuxième position de départ (AP2) jusqu'à une deuxième position de fin (2.TEP), et
- l'outil à tailler les engrenages (10) et la pièce de roue conique (11) effectuent un deuxième processus de taillage en développante (WB) dans une deuxième zone de taillage en développante, le premier processus de taillage en développante (WA) et le deuxième processus de taillage en développante (WB) étant différents.

3. Procédé (100) selon la revendication 2, **caractérisé en ce que** le premier processus de taillage en développante (WA) et le deuxième processus de taillage en développante (WB) sont un taillage en développante partiel et l'autre processus de taillage en développante (WC) est un taillage en développante complet.

4. Procédé selon la revendication 2 ou 3, **caractérisé en ce que** le deuxième processus d'usinage (111) comprend un deuxième mouvement d'avance relatif pour amener l'outil à tailler les engrenages (10) dans la deuxième position de départ (AP2) par rapport à la pièce de roue conique (11).

5. Procédé selon la revendication 2 ou 3, **caractérisé en ce que** le procédé de taillage en développante est un procédé de taillage en développante par immersion à plusieurs étapes, dans lequel le premier processus d'usinage (110) comprend un premier mouvement d'immersion productif (PB) depuis la première position de départ (AP1) jusqu'à la première position de fin (1.TEP), et le deuxième processus d'usinage (111) comprend un deuxième mouvement d'immersion productif (PF), depuis la deuxième position de départ (AP2) jusqu'à la deuxième position de fin (2.TEP).

6. Procédé selon l'une des revendications 2, 3 ou 4, **caractérisé en ce que** le premier processus de taillage en développante (WA) et le deuxième processus de taillage en développante (WB) sont différents.

7. Procédé selon l'une des revendications 1 à 6, **caractérisé en ce que** le premier processus de taillage en développante (WA) est réalisé dans une autre plage angulaire de basculement de taillage en développante que l'autre processus de taillage en développante (WC).

8. Procédé selon l'une des revendications 1 à 6, **caractérisé en ce que** le premier processus de taillage en développante (WA) commence avec un autre angle de basculement de taillage en développante que l'autre processus de taillage (WC).

9. Procédé selon l'une des revendications 1 à 6, **caractérisé en ce que**, après le premier processus de taillage en développante (WA), il reste une surépaisseur de matière au niveau de l'entredent (13) de la pièce de roue conique (11), cette surépaisseur de matière étant éliminée dans le cadre de l'autre processus de taillage en développante (WC).

10. Procédé selon l'une des revendications 1 à 9, **caractérisé en ce que** le premier processus de taillage en développante (110) est réalisée interstice par interstice, avant que suive l'autre processus de taillage (WC) interstice par interstice.

11. Procédé selon l'une des revendications 1 à 9, **caractérisé en ce qu'**il est effectué interstice après interstice.

12. Procédé selon l'une des revendications 1 à 9, **caractérisé en ce que** dans le cadre du premier processus d'usinage (110), les entredents (13) sont produits à partir de la matière complète de la pièce de roue conique (11).

13. Procédé selon la revendication 12, **caractérisé en ce que** la matière de la pièce de roue conique (11) n'a pas été durcie avant la réalisation du premier processus d'usinage (110).

14. Procédé selon l'une des revendications 1 à 9, **caractérisé en ce qu'**il s'agit de meuler ou de fraiser des entredents taillés (13).

15. Procédé selon l'une des revendications 1 à 9, **caractérisé en ce que** la troisième zone de taillage en développante est plus grande que la zone délimitée par les angles de taillage en développante de profil.
